# FASCICULE DE BREVET EUROPEEN

(11) **EP 1 470 980 B1**
(45) Date de publication et mention de la délivrance du brevet: **11.10.2006**
(21) Numéro de dépôt: 04008298.4
(22) Date de dépôt: 06.04.2004
(51) Int. Cl.: B60T 13/575

(54) **Servomoteur d'assistance pneumatique au freinage à bruit de fonctionnement réduit**
Pneumatischer Bremskraftverstärker mit reduziertem Funktionsgeräusch
Pneumatic brake booster with reduced operational noise level

(30) Priorité: 08.04.2003 FR 0304322
(43) Date de publication de la demande: 27.10.2004
(73) Titulaire: ROBERT BOSCH GMBH, 70442 Stuttgart (DE)
(72) Inventeur: Leboisne, Cédric, 75011 Paris (FR); Rossi, Teddy, 91420 Morgangis (FR); Rocher, Christian, 95120 Ermont (FR)
(74) Mandataire: Hurwic, Aleksander Wiktor

(56) Documents cités:
- WO-A-02/47952
- FR-A- 2 809 068
- US-B1- 6 352 015

## Description

La présente invention se rapporte à un servomoteur d'assistance pneumatique au freinage à bruit de fonctionnement réduit.

Les servomoteurs d'assistance pneumatique au freinage de type connu sont disposés entre une pédale de frein et un maître-cylindre et transmettent au maître-cylindre l'effort amplifié appliqué à la pédale par un conducteur.

Le servomoteur comporte une enveloppe pneumatique étanche d'axe longitudinal, une jupe montée à coulissement axial étanche dans l'enveloppe, un piston pneumatique monté rigidement dans un orifice central de la jupe et solidaire en déplacement de la jupe, une chambre à basse pression ou chambre avant et une chambre à pression variable ou chambre arrière délimitées par la jupe et l'enveloppe, une valve trois voies montée dans une queue du piston et commandée par une tige de commande et apte à mettre en communication la chambre à basse pression avec le chambre à pression variable ou à isoler de manière étanche la chambre avant de la chambre arrière et à alimenter la chambre arrière en fluide pneumatique à haute pression, par exemple de l'air à pression atmosphérique.

La tige de commande comporte une première extrémité longitudinale arrière liée à une pédale de frein et une deuxième extrémité opposée à la première extrémité montée de manière roulante dans un plongeur monté à coulissement dans le piston pneumatique.

La valve trois voies comporte un premier clapet d'équilibrage apte à mettre en communication ou à isoler la chambre avant et la chambre arrière dont un siège est porté par le piston et un deuxième clapet d'admission permettant l'alimentation en air à pression atmosphérique de la chambre arrière, dont un siège de clapet est porté par une extrémité arrière du plongeur.

Les obturateurs des premier et deuxième clapets sont formés par une membrane en élastomère venant s'appliquer sur l'un ou l'autre ou les deux premier et deuxième siège suivant l'actionnement de la tige de commande. Un ressort vient confirmer l'application de la membrane sur le ou les sièges de clapet.

Une tige de poussée coaxiale à la tige de commande est disposé entre la deuxième extrémité du palpeur et un piston du maître-cylindre et transmet par une extrémité longitudinal avant en appui contre un piston hydraulique du maître-cylindre l'effort de freinage appliqué par le conducteur et l'effort d'assistance fourni par le servomoteur.

Un disque de réaction en matériau sensiblement incompressible est disposé à une extrémité arrière de la tige de poussée et reçoit par une face arrière les efforts appliqués par le conducteur et par le piston pneumatique et par une face avant la réaction du maître-cylindre, et transmet une partie de la réaction du maître-cylindre à la tige de commande par l'intermédiaire du plongeur, permettant ainsi une conducteur la gestion du freinage.
Au repos, un jeu est prévu entre le disque de réaction et le plongeur, déterminant la phase de saut bien connue de l'homme du métier.

Il a été remarqué parfois un bruit appelé « wiper noise » car proche du bruit d'un essuie-glace sur un pare-brise sec. Ce bruit peut apparaître avant que le maître-cylindre n'imprime une réaction hydraulique au disque de réaction par l'intermédiaire de la tige de poussée, lors d'un déplacement rapide de la tige de commande avec un faible effort. Ce bruit est dû à une phase d'instabilité de la valve trois voies

Le fonctionnement normal d'un servomoteur est le suivant. Lorsque le conducteur appui sur la pédale de frein, la tige de commande est déplacée axialement et emporte le plongeur en direction de la tige de poussée. Le déplacement du plongeur vers la tige de poussée ferme le clapet d'équilibrage, isolant la chambre avant de la chambre arrière et ouvre le clapet d'admission, permettant à l'air à pression atmosphérique de pénétrer dans la chambre arrière. Une différence de pression apparaît alors entre la chambre avant et la chambre arrière, provoquant le déplacement pneumatique en direction de la tige de poussée. La tige de poussée est alors déplacée, emportant au moins un piston du maître-cylindre. La pression augmente alors dans le circuit hydraulique de freinage, qui est retransmise par l'intermédiaire de la tige de poussée au disque de réaction. Le disque de réaction combine alors les efforts appliquées par la tige de poussée, le piston pneumatique et le plongeur. Une réaction est alors retransmise au conducteur par l'intermédiaire de la tige de commande qui peut alors gérer le niveau de freinage.
Cependant parfois, il peut arriver pour une vitesse déterminée de déplacement de la tige de commande et un effort appliqué à la tige de commande déterminé, que le piston pneumatique après fermeture du clapet d'équilibrage et ouverture du clapet d'admission, se déplace axialement vers la tige de poussée avec une vitesse suffisante pour provoquer la réouverture du clapet d'équilibrage et la fermeture du clapet d'admission. Le piston pneumatique est repoussé alors axialement vers la pédale, provoquant la fermeture du clapet d'équilibrage et l'ouverture du clapet d'admission. Cette séquence d'ouverture-fermeture des clapets a lieu plusieurs fois jusqu'à ce qu'une réaction apparaisse dans le maître-cylindre et que le disque de réaction se déforme.

Les séquences d'ouverture-fermeture provoquent alors le bruit de « wiper noise ». Ce bruit n'est en aucun cas révélateur d'un dysfonctionnement du servomoteur mais peut cependant laisser croire au conducteur que le système de freinage est endommagé. Par conséquent, il est nécessaire de le supprimer, sinon le réduire pour qu'il ne soit plus audible par le conducteur.

Dans le document FR 00/06715 , il a été proposé un contact permanent entre le plongeur et le disque de réaction et de prévoir un jeu pour le saut entre la face avant du disque de réaction et la tige de poussée. Cette solution très efficace dans la majorité des cas, n'est cependant pas suffisante pour certains véhicules.

Dans le document US 6,352,015 B1, il a été proposé un moyen d'amortissement entre la commande de freinage et le piston pneumatique effectif uniquement en présence d'une réaction hydraulique.

De plus, il n'est pas envisageable d'augmenter l'isolation phonique du véhicule et du servomoteur pour des raisons d'encombrement et de prix de revient.

C'est par conséquent un but de la présente invention d'offrir un servomoteur silencieux dans toutes les situations de freinage.

C'est également un but de la présente invention d'offrir un servomoteur de conception simple.

C'est également un but de la présente invention d'offrir un servomoteur de coût de fabrication faible.

Les buts précédemment énoncés sont obtenus par un servomoteur comportant une enveloppe dans lequel coulisse une jupe de manière étanche, un piston solidaire de la jupe, une valve trois voies actionnée par un tige de commande entraîné à une première extrémité par une pédale , un plongeur monté à une deuxième extrémité longitudinale opposée et monté à coulissement dans le corps de piston, le déplacement relatif de l'ensemble tige de commande-plongeur et du piston pneumatique étant limité au moins dans une première phase de freinage.

En d'autres termes, le servomoteur comporte des moyens pour réduire l'amplitude des déplacements entre l'ensemble de commande et le piston.

La présente invention a principalement pour objet un servomoteur d'assistance pneumatique au freinage comportant une enveloppe d'axe longitudinal, une première chambre à basse pression, une deuxième chambre à pression variable, une jupe délimitant la première et la deuxième chambres, et montée à coulissement étanche dans l'enveloppe, un piston pneumatique monté solidaire d'une partie centrale de la jupe, une valve trois voies montée dans une queue du piston pneumatique, et actionnée par une commande de freinage comportant une tige de commande d'axe longitudinal, entraînée par une pédale à une première extrémité longitudinale, un plongeur liée de manière rotulante à une deuxième extrémité longitudinale de ladite tige de commande, ladite valve trois voies comportant un clapet d'équilibrage apte à mettre en communication au repos la première et la deuxième chambres, et une clapet d'admission apte à permettre l'alimentation en fluide pneumatique à haute pression de la deuxième chambre, le clapet d'équilibrage comportant un premier siège porté par le corps du piston et un obturateur, le clapet d'admission comportant un deuxième siège porté par une première extrémité longitudinale du plongeur et ledit obturateur, le plongeur comporte à une deuxième extrémité longitudinale opposée à la première extrémité une surface en regard d'une première face d'un disque de réaction en appui par une deuxième face sur une première extrémité longitudinale d'une tige de poussée apte à transmettre un effort de freinage appliqué à la commande de freinage et l'assistance de freinage à un maître-cylindre, le piston pneumatique comportant également dans sa partie centrale une surface en appui contre la première face du disque de réaction caractérisé en ce que ledit servomoteur comporte des moyens (68, 168, 268, 368, 468) permettant d'amortir le mouvement relatif et notamment oscillatoire entre la commande de freinage et le piston pneumatique en l'absence de réaction hydraulique.

La présente invention a également pour objet un servomoteur d'assistance pneumatique au freinage caractérisé en ce que lesdits moyens d'amortissement réalisent un couplage par frottement entre la commande de freinage et le piston pneumatique.

La présente invention a également pour objet un servomoteur d'assistance pneumatique au freinage caractérisé en ce que lesdits moyens d'amortissement sont interposés entre le plongeur et le piston.

La présente invention a également pour objet un servomoteur d'assistance pneumatique au freinage caractérisé en ce que lesdits moyens d'amortissement comportent une gorge annulaire pratiquée dans une paroi extérieure d'une première partie cylindrique du plongeur proche de la tige de commande et un élément en matériau à fort coefficient de frottement monté dans ladite gorge et destiné à venir en contact d'une première section cylindrique du passage du piston.

La présente invention a également pour objet un servomoteur d'assistance pneumatique au freinage caractérisé en ce que lesdits moyens d'amortissement comportent une gorge annulaire pratiquée dans une paroi intérieure d'une première section cylindrique du passage du piston et un élément en matériau à fort coefficient de frottement monté dans ladite gorge et destiné à venir en contact d'une première partie cylindrique du plongeur proche de la tige de commande.

La présente invention a également pour objet un servomoteur d'assistance pneumatique au freinage caractérisé en ce que lesdits moyens d'amortissement comportent une gorge annulaire pratiquée dans une paroi extérieure d'une deuxième partie cylindrique du plongeur proche du disque de réaction et un élément en matériau à fort coefficient de frottement monté dans ladite gorge et destiné à venir en contact d'une deuxième section cylindrique du passage du piston.

La présente invention a également pour objet un servomoteur d'assistance pneumatique au freinage caractérisé en ce que ledit élément est fabriqué en élastomère.

La présente invention a également pour objet un servomoteur d'assistance pneumatique au freinage caractérisé en ce que ledit élément est un joint torique.

La présente invention a également pour objet un servomoteur d'assistance pneumatique au freinage caractérisé en ce que les efforts de frottement entre le piston et la commande de freinage sont compris de manière avantageuse entre 5 Newtons et 40 Newtons.

La présente invention a également pour objet un servomoteur d'assistance pneumatique au freinage caractérisé en ce que les efforts de frottement entre le piston et la commande de freinage sont compris de manière plus avantageuse entre 5 Newtons et 20 Newtons.

La présente invention a également pour objet un servomoteur d'assistance pneumatique au freinage caractérisé en ce que les efforts de frottement entre le piston et la commande de freinage sont compris de manière encore plus avantageuse entre 10 Newtons et 20 Newtons.

La présente invention a également pour objet un servomoteur d'assistance pneumatique au freinage caractérisé en ce que lesdits moyens d'amortissement relient par une première extrémité un élément fixe du piston et, et par une deuxième extrémité une face arrière de l'obturateur.

La présente invention a également pour objet un servomoteur d'assistance pneumatique au freinage caractérisé en ce que lesdits moyens d'amortissement relient par une première extrémité un élément fixe du piston, et par une deuxième extrémité la tige de commande.

La présente invention a également pour objet un servomoteur d'assistance pneumatique au freinage caractérisé en ce que lesdits moyens d'amortissement sont du type magnétiques.

La présente invention a également pour objet un servomoteur d'assistance pneumatique au freinage caractérisé en ce que des premier et deuxième aimants sont montés respectivement sur la commande de freinage et sur le piston pneumatique de manière à ce que leurs pôles opposés soient en vis-à-vis ou au moins partiellement.

La présente invention a également pour objet un servomoteur d'assistance pneumatique au freinage caractérisé en ce qu'au moins l'un desdits aimants est un électroaimant et en ce qu'il est prévu d'arrêter l'alimentation électrique dudit électroaimant lorsque les risques de mouvements relatifs oscillatoires perturbateurs entre le piston et le plongeur ont disparus.

La présente invention a également pour objet un servomoteur d'assistance pneumatique au freinage caractérisé en ce que lesdits moyens d'amortissement sont du type électrostatique.

La présente invention a également pour objet un servomoteur d'assistance pneumatique au freinage caractérisé en ce que le piston et la commande de freinage sont au moins localement chargés par des charges électrostatiques opposées.

La présente invention sera mieux comprise à l'aide de la description qui suit et des figures annexées, sur lesquelles l'avant et l'arrière correspondent respectivement à la gauche te la droite des dessins et sur lesquelles :
- La figure 1 est une vue en coupe longitudinale d'un premier exemple d'un premier mode de réalisation d'un servomoteur pneumatique selon la présente invention ;
- La figure 2 est une vue de détail de la figure 1 ;
- La figure 3 est une vue en coupe longitudinale d'un détail d'un deuxième exemple du premier mode de réalisation selon la présente invention ;
- La figure 4 est une vue en coupe longitudinale d'un détail d'un troisième exemple du premier mode de réalisation selon la présente invention ;
- La figure 5 est une vue en coupe longitudinale d'un détail d'un premier exemple d'un deuxième mode de réalisation selon la présente invention ;
- La figure 6 est une vue en coupe longitudinale d'un détail d'un deuxième exemple d'un deuxième mode de réalisation selon la présente invention ;
- La figure 7 est une vue en coupe longitudinale d'un cinquième mode de réalisation d'un servomoteur selon la présente invention.

Les mêmes références sont utilisées pour décrire les éléments ayant la même fonction et la même structure dans toute la description.

Tous les éléments décrits sont de géométrie de révolution autour d'un axe longitudinale X, dans le cas contraire cela est décrit.

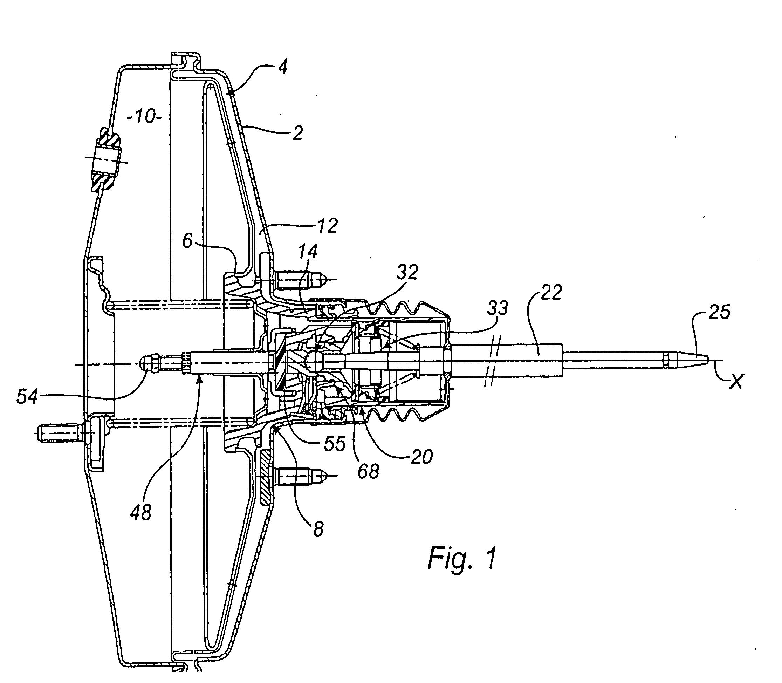

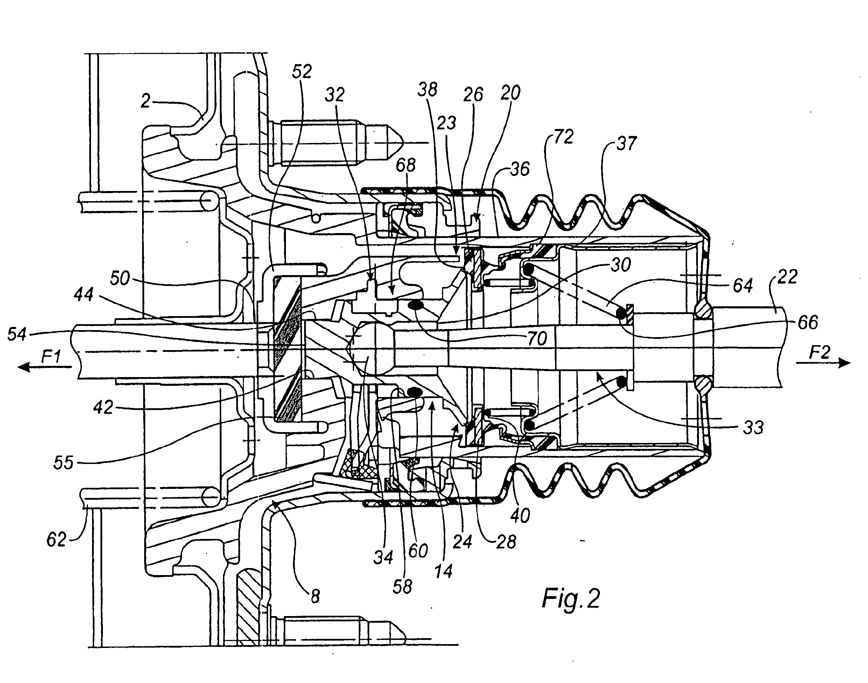

Sur les figures 1 et 2, on peut voir un premier exemple d'un premier mode de réalisation d'un servomoteur selon la présente invention d'axe longitudinal X comportant une enveloppe 2 définissant un volume étanche dans laquelle est montée à coulissement une jupe 4 muni d'un orifice central 6 dans lequel est monté de manière étanche un piston pneumatique 8. La jupe divise le volume étanche en une première chambre avant à basse pression 10 et une deuxième chambre arrière 12 à pression variable. La première chambre 10 est alimentée par exemple en fluide pneumatique à basse pression par une pompe à vide ou la prise d'air d'un moteur.

Le piston pneumatique 8 est formé par un corps 14 de forme sensiblement tronconique orienté vers l'arrière, la base du tronc de cône étant fixé dans l'orifice central 6 de la jupe 4. Le corps 14 comporte également un queue sensiblement cylindrique s'étendant vers l'arrière.

Le corps 14 de piston est percé d'un passage axial 18 traversant dans lequel est monté une valve trois voies 20 actionnée par une tige de commande 22 liée à une première extrémité 25 longitudinale à une pédale de frein (non représentée).

La valve trois voies 20 comporte un premier clapet 23 d'équilibrage mettant en communication au repos la chambre avant 10 et la chambre arrière 12, et un deuxième clapet 24 d'admission de l'air à pression atmosphérique dans la chambre arrière en phase de freinage.
Le premier 23 et le deuxième 24 clapets comportent respectivement des premier et deuxième sièges 26,28 portés respectivement par le corps de piston 14 et par une première extrémité longitudinale arrière 30 d'un plongeur 32 monté à une deuxième extrémité axiale 34 de la tige de commande 22.

L'extrémité arrière 30 du plongeur 32 reçoit de manière rotulante l'extrémité 34 avant de la tige de commande et s'étend vers l'arrière par un épanouissement tronconique orienté vers l'avant.

L'ensemble plongeur 32 et tige de commande 22 forme une commande de freinage 33,

Chaque clapet 22,24 comporte également un obturateur 36 solidaire du corps de piston comportant une plaque annulaire 38 apte à venir en appui contre le premier siège 26 ou le deuxième siège 28 ou les deux 26,28 simultanément en position d'équilibre. Un ressort cylindrique 35 confirmant l'application de l'obturateur 36 sur le premier et/ou deuxième sièges 26,28 est monté en réaction contre un élément fixe 37 du corps de piston et une face arrière 40 de la plaque 38 d'obturation.

Le plongeur 32 est monté à coulissement dans une partie avant de plus faible diamètre du passage 18 traversant le corps 18 de piston.

Le servomoteur comporte également une tige de poussée 48 coaxiale à la tige de commande 22 et monté entre le plongeur et un maître-cylindre (non représenté). La tige de poussée 48 comporte à une première extrémité longitudinale 50 arrière un logement 52 en forme de coupelle recevant un disque de réaction 55 venant en regard d'une deuxième extrémité longitudinale avant 54 du plongeur 32, appelée palpeur et d'une extrémité avant du piston pneumatique.

La tige de poussée 48 transmet au maître-cylindre les efforts appliqués à la tige de commande 22 et par le piston pneumatique entraîné par la jupe 4.

Le disque de réaction 55 est réalisé en matériau sensiblement incompressible et compose les efforts fourni par la tige de commande, par le piston pneumatique et par la tige de poussée transmettant la réaction du maître-cylindre.

Le plongeur 32 comporte au moins une première partie cylindrique 44 apte à être montée avec un jeu minimum pour éviter le coincement dans une première section cylindrique 42 de la partie avant du passage 18 assurant le guidage du plongeur dans le corps du piston, la première partie cylindrique 44 portant le palpeur 54. Dans l'exemple représenté, le plongeur comporte également une deuxième partie cylindrique 58 en avant de l'épanouissement tronconique et de plus grand diamètre par rapport au diamètre de la première partie cylindrique 44 et monté également avec un jeu minimum dans une deuxième section cylindrique 60 du passage 18 du corps de piston 14.

Le servomoteur comporte également un premier ressort de rappel 62 du piston en position repos et monté en compression entre le piston et une face intérieure de l'enveloppe 2, et un deuxième ressort de rappel 64 de la tige de commande monté en compression entre une surface annulaire 66 en saillie de la surface de la tige de commande 22 et l'élément fixe 37 du piston.

Le servomoteur selon la présente invention comporte également des moyens 68 pour amortir le mouvement relatif et notamment oscillatoire entre la commande de freinage 33 et le piston pneumatique 8. Dans l'exemple particulier représenté aux figures 1 et 2, les moyens 68 réalisent un couplage par frottement entre le plongeur 32 et le piston 8 pour réduire l'amplitude des mouvements oscillants du piston relativement au plongeur 32. Dans l'exemple représenté, les moyens 68 comportent un élément 72 annulaire en matériau à haut coefficient de frottement, monté dans une gorge annulaire 70 pratiquée sur la surface extérieure de la deuxième partie cylindrique 58 du plongeur 32. Les dimensions du joint 72 et de la gorge 70 sont déterminées de manière à assurer un effort de frottement suffisant entre la surface du joint 72 et la deuxième section cylindrique 60 du passage 18 pour atténuer de manière suffisante les mouvements oscillatoires entre le piston et le palpeur et éviter ou au moins réduire le bruit de « wiper noise ».

L'élément annulaire est par exemple réalisé en élastomère, par exemple en caoutchouc.

L'élément annulaire est avantageusement un joint torique, qui est d'un faible prix de revient de montage très simple ainsi que de durée de vie élevée.

La présence de ces efforts de frottement entre le plongeur et le piston limite le déplacement relatif du piston et du plongeur dans un premier sens axiale indiqué par la flèche F1 et dans un deuxième sens indiqué par la flèche F2, réduisant alors les risques d'apparition du bruit « wiper noise ». Ainsi lorsque le conducteur appuie sur la pédale de frein dans des conditions de vitesse et d'effort d'application déterminées, le clapet d'équilibrage se ferme, le clapet d'admission s'ouvre, le piston pneumatique se déplace axialement en direction de la tige de poussée. En l'absence de réaction du maître-cylindre en tout début de phase de freinage, le piston tend à se déplacer rapidement, or du fait des frottements entre le plongeur 32 et le piston 8, l'amplitude du déplacement du piston 8 dans le sens F1 est réduit, ainsi que son déplacement dans le sens F2. Par conséquent, le mouvement oscillatoire entre le plongeur et le piston est fortement réduit.

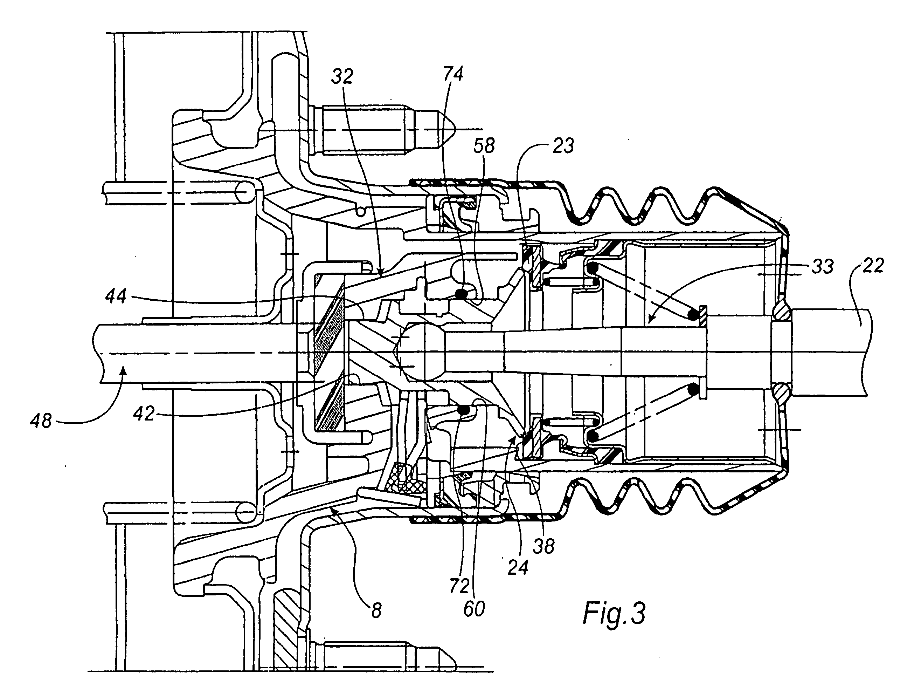

Sur la figure 3, on peut voir un deuxième exemple de réalisation du premier mode de réalisation dans le quel les moyens des moyens d'amortissement du mouvement relatif entre le plongeur et le piston pneumatique sont portés par le piston 8. Le piston 8 comporte une gorge 74 pratiquée dans la surface intérieure de la deuxième section cylindrique 60 du passage 18 dans lequel est monté un joint torique 72, et en contact de la deuxième partie cylindrique 58.

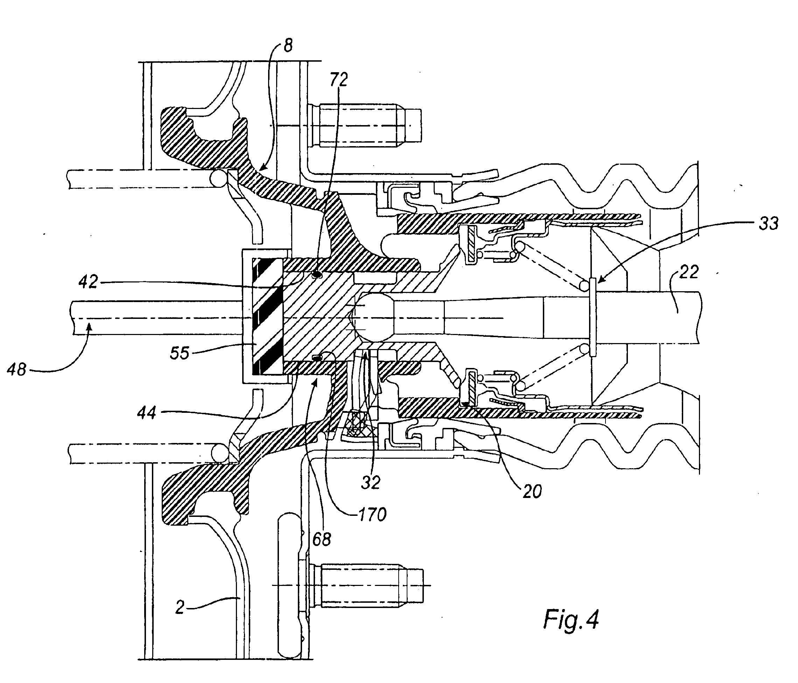

Sur la figure 4, on peut voir un troisième exemple de réalisation du premier mode de réalisation dans lequel le joint torique est monté dans une gorge 170 pratiqué dans la première partie cylindrique 44 du plongeur, le joint venant alors en contact de la surface intérieure de la première section cylindrique 42.

Pour le servomoteur représenté en figure 1 à 4, la fréquence de vibration du piston 8 par rapport au palpeur 32 est typiquement de l'ordre de 50 Hertz. Les efforts de frottement qui sont nécessaires pour cette fréquence de vibrations entre le plongeur 32 et le piston 8, sont avantageusement compris entre 5 et 40 Newtons, de manière préférée entre 5 et 20 Newtons et de manière encore préférée entre 10 et 20 Newtons.

Il est également envisageable de prévoir un gorge pratiquée dans la surface intérieure de la première section cylindrique 42 pour recevoir le joint 72.

Il est bien entendu que l'on peut prévoir tout autre type de joint, par exemple des joints quadrilobes ou joint à lèvre, d'autre part il est envisageable de prévoir de disposer plusieurs joints si les oscillations le nécessitent, par exemple un premier joint au niveau de la première partie cylindrique et un deuxième joint au niveau de la deuxième partie cylindrique du plongeur.

Il est également envisageable de prévoir des moyens 68 comportant des éléments en matériau à haut coefficient de frottement réparties de manière angulaire sur la périphérie du plongeur ou dans le passage 18. Ces éléments sont par exemple surmoulés avec le piston réalisé typiquement par moulage.

Il est également envisageable de réaliser les moyens 68 avec un manchon en matériau à fort coefficient de frottement monté sur le plongeur ou dans le passage 18.

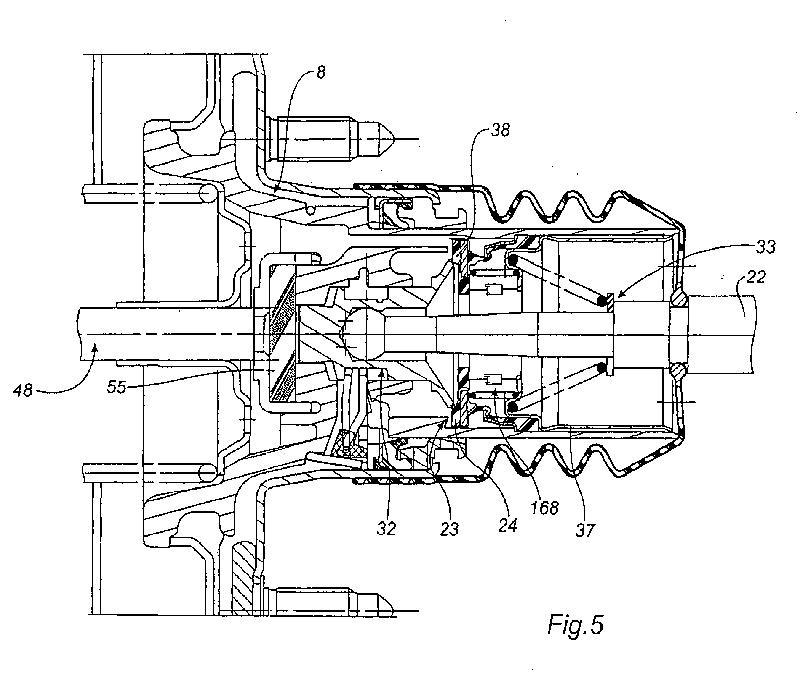

Sur la figure 5, on peut voir un deuxième mode de réalisation d'un servomoteur selon la présente invention comportant des moyens amortisseur 168 du mouvement relatif entre la commande de freinage 33 et le piston pneumatique 8.

Les moyens 168 sont fixés à une face arrière de la plaque obturatrice 38 de la valve trois voies 20 et à l'élément fixe 37 du piston pneumatique 8.

Le fonctionnement du servomoteur selon, la présente invention est le suivant : suite à un déplacement de la commande de freinage 33 en direction de la tige de poussée 48 le piston pneumatique 8 est emporté par la différence de pression entre la chambre avant 10 et la chambre arrière 12, la plaque d'obturation 38 vient en contact du premier siège 26 et ferme le clapet d'équilibrage 23 et s'éloigne du deuxième siège 24 et ouvre le clapet d'admission 28. Dans certains cas particulier, le piston pneumatique 8 se déplace dans le premier sens F1 avec une vitesse trop importante, la plaque obturatrice 38 reste en contact du premier siège 26 et maintien le clapet d'équilibrage 23 fermé tant que le premier siège 26 est axialement en arrière du deuxième siège 28. Lorsque le premier siège 26 est axialement en avant du deuxième siège 28, la plaque obturatrice 38 vient en application du deuxième siège 28 et s'éloigne du premier siège 26. Le déplacement de la plaque obturatrice 38 est alors déterminée par la position du plongeur 32 ou de la commande de freinage 33. Or du fait de la présence du moyen 168 entre la plaque obturatrice 38 et le piston 8, le mouvement du piston 8 relativement à la commande de freinage 33 est amorti dans le sens F1 par l'intermédiaire de la plaque obturatrice 38. Puis le piston 8 se déplace dans le sens F2, le premier siège 26 porté par le piston 8 vient à nouveau en contact de la plaque obturatrice 38 et tend à vouloir la repousser dans le sens F2, et à ouvrir le clapet d'admission 24, le mouvement de la plaque obturatrice 38 étant également amortie par les moyens 168 dans le sens F2, le mouvement oscillatoire du piston 8 relativement à la commande de freinage 33 est amorti.

Il est également envisageable de réaliser l'effet d'amortissement directement entre le plongeur et la plaque obturatrice, c'est-à-dire de lier par des moyens amortisseurs le plongeur 22 et la plaque obturatrice.

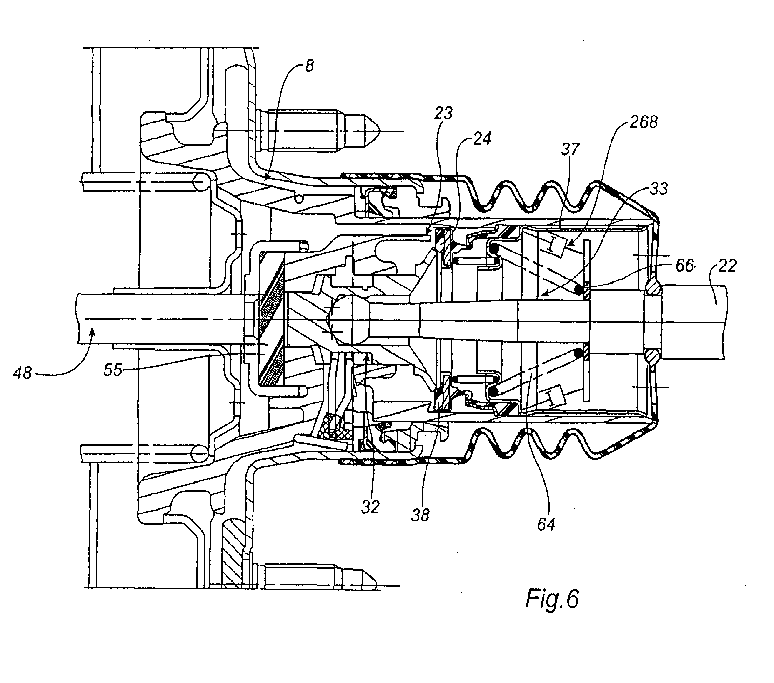

Sur la figure 6, on peut voir un troisième mode de réalisation d'un servomoteur selon la présente invention dans lequel des moyens d'amortissement 268 sont disposés sur le piston pneumatique 8 et la tige de commande 22. Dans l'exemple représenté, les moyens 168 sont fixés par une première extrémité à l'élément fixe du piston pneumatique et à la surface annulaire d'appui 66 du deuxième ressort de rappel 64 de la tige de commande 22.

Le fonctionnement de la valve trois voies est sensiblement le même que celui du deuxième mode de réalisation du servomoteur selon la présente invention et représenté sur la figure 5, cependant l'amortissement du mouvement du piston par rapport à la commande de freinage s'effectue directement entre la tige de commande 22 et le piston 8.

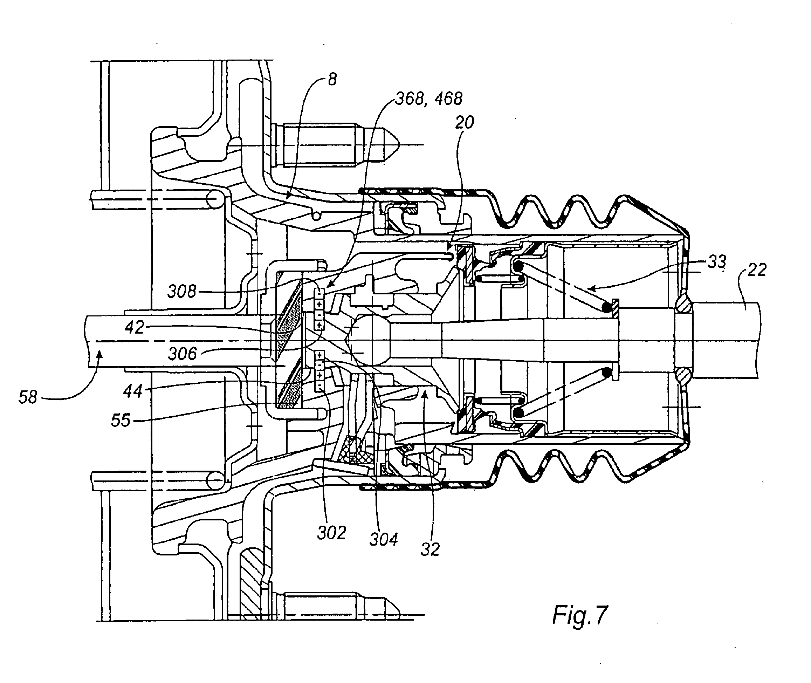

Sur la figure 7, on peut voir un quatrième mode de réalisation selon la présente invention dans lequel les moyens d'amortissement 368,468 sont du type magnétiques.

Dans un premier exemple, le plongeur 32 comporte sur la paroi extérieure de la première partie cylindrique 44 un premier aimant 302 et le piston pneumatique 8 comporte sur la paroi intérieure de la première section cylindrique 42 du passage 18 du piston un deuxième aimant 304 sensiblement en regard du premier aimant 302, chacun des premier et deuxième aimants 302,304 étant orientés de manière à ce que des pôles des premier et deuxième aimants en regard soient opposés de manière à ce que le champ magnétique apparaissant s'oppose à l'éloignement relatif du plongeur et du piston.

En particulier les premier et deuxième aimants 302,304 sont avantageusement de formes annulaires et sont montés dans des première et deuxième gorges 306,308 pratiquées respectivement dans les premières partie cylindrique 44 du plongeur 32 et section cylindrique 42 du passage 18 du piston 8. La forme annulaire des aimants 302,304 permet de s'affranchir d'une orientation angulaire du plongeur 32 par rapport au piston 8 lors du montage. Il est cependant bien entendu que l'on peut prévoir des premier et deuxième aimants répartis angulairement sur la surface du plongeur 32 et du passage 18 du piston 8.
Le deuxième aimant est avantageusement surmoulé dans le piston pneumatique qui est typiquement réalisé par moulage de matière plastique.

Dans cette exemple les aimants sont du type aimant permanent, aimant électrique ou électro-aimant. Dans ces derniers cas, il est alors avantageusement possible de réaliser un système actif permettant de créer un effet d'amortissement du mouvement relatif du piston par rapport au plongeur uniquement dans la phase susceptible de voir apparaître le bruit de « wiper noise ».

En effet il est possible de modifier le polarisation de l'électroaimant en fonction de la pression dans le maître-cylindre. Un calculateur génère un ordre d'arrêt de l'alimentation électrique de l'un au l'autre des aimants au delà d'une certaine pression hydraulique dans le maître-cylindre caractérisant le fait q'une réaction dans le sens F2 est appliqué au piston pneumatique et à la commande de freinage par l'intermédiaire de la face arrière du disque de réaction, éliminant les mouvements relatifs parasites entre le piston et la commande de freinage.

Il est également envisageable de fixer l'alimentation de l'électroaimant en fonction de la course relative du piston et du plongeur.

Il est bien entendu que l'on peut prévoir d'utiliser un aimant permanent et un électroaimant.

Il est bien entendu que les moyens électromagnétiques peuvent être disposés en tout autre endroit permettant de coupler le piston pneumatique et la commande de freinage.

Dans un cinquième mode de réalisation le piston et au moins un élément de la commande de freinage sont chargés au moins localement de charges électrostatiques de charges opposés créant une attraction entre le piston et la commande de freinage. Les zones chargées de manière électrostatique sont en regard l'une d'autre ou au moins aptes à se recouvrir au moins partiellement.

Il est bien entendu que les moyens d'amortissement ne sont pas nécessairement bidirectionnelles et qu'il est envisageable de ne prévoir un amortissement que dans le sens F1 ou dans le sens F2, ce qui produirait néanmoins une réduction notable du bruit de « wiper noise »,

Il est également bien entendu que des moyens d'amortissement ayant un effet temporaire, uniquement en phase de début de freinage ne sort pas du cadre de la présente invention,

Il est bien entendu que le servomoteur selon la présente invention peut également comporter d'autres moyens pour éviter le bruit de « wiper noise », par exemple un plongeur comportant un palpeur muni d'une excroissance axiale destinée à venir en permanence en contact de la face arrière du disque de réaction et un logement de disque de réaction autorisant un jeu entre la face avant du disque de réaction et le fond du logement afin de déterminer le saut.

On a bien réaliser un servomoteur d'assistance pneumatique au freinage simple ne produisant pas ou peu de bruit de « wiper moise »,

La présente invention s'applique principalement à l'industrie du freinage pour voitures particulières.

## Revendications

1. Servomoteur d'assistance pneumatique au freinage comportant une enveloppe (2) d'axe longitudinal (X), une première chambre à basse pression (10), une deuxième chambre à pression variable (12), une jupe (4) délimitant la première et la deuxième chambres (10,12) et montée à coulissement étanche dans l'enveloppe (2), un piston pneumatique (8) monté solidaire d'une partie centrale de la jupe (2), une valve trois voies (20) montée dans une queue (14) du piston pneumatique (8), et actionnée par une commande de freinage (33) comportant une tige de commande (22) d'axe longitudinal (X), entraînée par une pédale à une première extrémité longitudinale (25), un plongeur (32) monté de manière rotulante à une deuxième extrémité longitudinale (34) de ladite tige de commande (22), ladite valve trois voies (20) comportant un clapet d'équilibrage (23) apte à mettre en communication au repos la première et la deuxième chambres (10,12) et une clapet d'admission (24) apte à permettre l'alimentation en fluide pneumatique à haute pression de la deuxième chambre (12), le clapet d'équilibrage (23) comportant un premier siège (26) porté par le corps (14) du piston et un obturateur (36), le clapet d'admission (24) comportant un deuxième siège (28) porté par une première extrémité longitudinale du plongeur et ledit obturateur (36), le plongeur (32) comporte à une deuxième extrémité longitudinale opposée à la première extrémité (54) une surface en regard d'une première face d'un disque de réaction (55) en appui par une deuxième face sur une première extrémité longitudinale (50) d'une tige de poussée (48) apte à transmettre un effort de freinage appliqué à la commande de freinage et l'assistance de freinage à un maître-cylindre, le piston pneumatique (8) comportant également dans sa partie centrale une surface en appui contre la première face du disque de réaction (55) **caractérisé en ce que** ledit servomoteur comporte des moyens (68,168,268,368,468) permettant d'amortir le mouvement relatif et notamment oscillatoire entre la commande de freinage et le piston pneumatique en l'absence de réaction hydraulique.

2. Servomoteur d'assistance pneumatique au freinage selon la revendication 1 **caractérisé en ce que** lesdits moyens d'amortissement (68) réalisent un couplage par frottement entre la commande de freinage (33) et le piston pneumatique (8).

3. Servomoteur d'assistance pneumatique au freinage selon la revendication 2 **caractérisé en ce que** lesdits moyens d'amortissement (68) sont interposés entre le plongeur (32) et le piston (8).

4. Servomoteur d'assistance pneumatique au freinage selon la revendication 3 **caractérisé en ce que** lesdits moyens d'amortissement comportent une gorge annulaire (170) pratiquée dans une paroi extérieure d'une première partie cylindrique (44) du plongeur (32) proche de la tige de commande (22) et un élément en matériau (72) à fort coefficient de frottement monté dans ladite gorge (170) et destiné à venir en contact d'une première section cylindrique (42) d'un passage (18) du piston (8).

5. Servomoteur d'assistance pneumatique au freinage selon la revendication 3 **caractérisé en ce que** lesdits moyens d'amortissement (68) comportent une gorge annulaire (74) pratiquée dans une paroi intérieure d'une deuxième section cylindrique (60) du passage (18) du piston (8) et un élément (72) en matériau à fort coefficient de frottement monté dans ladite gorge (74) et destiné à venir en contact d'une deuxième partie cylindrique (58) du plongeur proche de la tige de commande.

6. Servomoteur d'assistance pneumatique au freinage selon la revendication 3 **caractérisé en ce que** lesdits moyens d'amortissement comportent une gorge annulaire (70) pratiquée dans une paroi extérieure d'une deuxième partie cylindrique (58) du plongeur proche du disque de réaction (55) et un élément (72) en matériau à fort coefficient de frottement monté dans ladite gorge (70) et destiné à venir en contact d'une deuxième section cylindrique (60) d'un passage (18) du piston (8).

7. Servomoteur d'assistance pneumatique au freinage selon l'une quelconque des revendications 4 à 6 **caractérisé en ce que** ledit élément (72) est fabriqué en élastomère.

8. Servomoteur d'assistance pneumatique au freinage selon la revendication précédente **caractérisé en ce que** ledit élément est un joint torique.

9. Servomoteur d'assistance pneumatique au freinage selon l'une quelconque des revendications de 2 à 8 **caractérisé en ce que** les efforts de frottement entre le piston (8) et la commande de freinage sont compris de manière avantageuse entre 5 Newtons et 40 Newtons.

10. Servomoteur d'assistance pneumatique au freinage selon la revendication précédente **caractérisé en ce que** les efforts de frottement entre le piston (8) et la commande de freinage sont compris de manière plus avantageuse entre 5 Newtons et 20 Newtons.

11. Servomoteur d'assistance pneumatique au freinage selon la revendication précédente **caractérisé en ce que** les efforts de frottement entre le piston (8) et la commande de freinage sont compris de manière encore plus avantageuse entre 10 Newtons et 20 Newtons.

12. Servomoteur d'assistance pneumatique au freinage selon la revendication 1 **caractérisé en ce que** lesdits moyens d'amortissement (168) relient par une première extrémité un élément fixe (37) du piston et par une deuxième extrémité une face arrière de l'obturateur (32).

13. Servomoteur d'assistance pneumatique au freinage selon la revendication 1 **caractérisé en ce que** lesdits moyens d'amortissement (268) relient par une première extrémité un élément fixe (37) du piston (8) et par une deuxième extrémité la tige de commande (22).

14. Servomoteur d'assistance pneumatique au freinage selon la revendication 1 **caractérisé en ce que** lesdits moyens d'amortissement (368,468) sont du type magnétiques.

15. Servomoteur d'assistance pneumatique au freinage selon la revendication précédente **caractérisé en ce que** des premier (302) et deuxième (304) aimants sont montés respectivement sur la commande de freinage (33) et sur le piston pneumatique (8) de manière à ce que leurs pôles opposés soient en vis-à-vis ou au moins partiellement.

16. Servomoteur d'assistance pneumatique au freinage selon la revendication précédente **caractérisé en ce qu'**au moins l'un desdits aimants (302,304) est un électroaimant et **en ce qu'**il est prévu d'arrêter l'alimentation électrique dudit électroaimant lorsque les risques de mouvements relatifs oscillatoires perturbateurs entre le piston et le plongeur ont disparus.

17. Servomoteur d'assistance pneumatique au freinage selon la revendication 1 **caractérisé en ce que** lesdits moyens d'amortissement sont du type électrostatique.

18. Servomoteur d'assistance pneumatique au freinage selon la revendication précédente **caractérisé en ce que** le piston et la commande de freinage sont au moins localement chargés par des charges électrostatiques opposées.

## Claims

1. Pneumatic brake booster comprising an envelope (2) of longitudinal axis (X), a first, low pressure, chamber (10), a second, variable pressure, chamber (12), a skirt (4) delimiting the first and second chambers (10, 12) and mounted sealed and slidable in the envelope (2), a pneumatic piston (8) rigidly attached to a central portion of the skirt (2), a three-way valve (20) mounted in a shank (14) of the pneumatic piston (8) and actuated by a brake control (33) comprising a control rod (22) of longitudinal axis (X) operated by a pedal at a first longitudinal end (25), a plunger (32) mounted in ball-joint fashion at a second longitudinal end (34) of the said control rod (22), the said three-way valve (20) comprising an equalizing valve (23) suitable for interconnecting the first and second chambers (10, 12) at rest and an inlet valve (24) suitable for allowing the second chamber (12) to be supplied with pneumatic fluid at high pressure, the equalizing valve (23) comprising a first seat (26) supported by the body (14) of the piston and a blanking element (36), the inlet valve (24) comprising a second seat (28) supported by a first longitudinal end of the plunger and the said blanking element (36), the plunger (32) comprises at a second longitudinal end, the opposite end to the first end (54), a surface facing a first face of a reaction disk (55) bearing via a second face on a first longitudinal end (50) of a thrust rod (48) suitable for transmitting a braking force applied to the brake control and the brake boosting effect to a master-cylinder, the pneumatic piston (8) also comprising in its central portion a surface (56) bearing against the first face of the reaction disk (55), **characterized in that** the said booster comprises means (68, 168, 268, 368, 468) allowing to damp the relative and in particular oscillatory movement between the brake control (33) and the pneumatic piston (8) when no hydraulic reaction exists.

2. Pneumatic brake booster according to claim 1, **characterized in that** the said damping means (68) make a friction coupling between the brake control (33) and the pneumatic piston (8).

3. Pneumatic brake booster according to claim 2, **characterized in that** the said damping means (68) are interposed between the plunger (32) and the piston (8).

4. Pneumatic brake booster according to claim 3, **characterized in that** the said damping means comprise an annular groove (170) made in an external wall of a first cylindrical portion (44) of the plunger (32) close to the control rod (22) and an element in a material (72) with a high coefficient of friction mounted in the said groove (170) and intended to come into contact with a first cylindrical section (42) of a passage (18) of the piston (8).

5. Pneumatic brake booster according to claim 3, **characterized in that** the said damping means (68) comprise an annular groove (74) made in an inner wall of a second cylindrical section (60) of the passage (18) of the piston (8) and an element (72) in a material with a high coefficient of friction mounted in the said groove (74) and intended to come into contact with a second cylindrical portion (58) of the plunger close to the control rod.

6. Pneumatic brake booster according to claim 3, **characterized in that** the said damping means comprise an annular groove (70) made in an outer wall of a second cylindrical portion (58) of the plunger close to the reaction disk (55) and an element (72) in a material with a high coefficient of friction mounted in the said groove (70) and intended to come into contact with a second cylindrical section (60) of a passage (18) of the piston (8).

7. Pneumatic brake booster according to any one of claims 4 to 6, **characterized in that** the said element (72) is made of elastomer.

8. Pneumatic brake booster according to the preceding claim, **characterized in that** said element is an O-ring.

9. Pneumatic brake booster according to any one of claims 2 to 8, **characterized in that** the friction forces between the piston (8) and the brake control lie advantageously between 5 Newtons and 40 Newtons.

10. Pneumatic brake booster according to the preceding claim, **characterized in that** the friction forces between the piston (8) and the brake control lie more advantageously between 5 Newtons and 20 Newtons.

11. Pneumatic brake booster according to the preceding claim, **characterized in that** the friction forces between the piston (8) and the brake control lie yet more advantageously between 10 Newtons and 20 Newtons.

12. Pneumatic brake booster according to claim 1, **characterized in that** the said damping means (168) connect via a first end a fixed element (37) of the piston and via a second end a rear face of the blanking element (32).

13. Pneumatic brake booster according to claim 1, **characterized in that** the said damping means (268) connect via a first end a stationary element (37) of the piston (8) and via a second end the control rod (22).

14. Pneumatic brake booster according to claim 1, **characterized in that** the said damping means (368, 468) are of the magnetic type.

15. Pneumatic brake booster according to the preceding claim, **characterized in that** a first magnet (302) and a second magnet (304) are mounted respectively on the brake control (33) and on the pneumatic piston (8) so that their opposite poles are facing each other or at least partially facing each other.

16. Pneumatic brake booster according to the preceding claim, **characterized in that** at least one of the said magnets (302, 304) is an electromagnet and **in that** provision is made to stop the power supply to the said electromagnet when the risks of disruptive oscillatory relative movements between the piston and the plunger have disappeared.

17. Pneumatic brake booster according to claim 1, **characterized in that** the said damping means are of the electrostatic type.

18. Pneumatic brake booster according to the preceding claim, **characterized in that** the piston and the brake control are at least locally charged with opposite electrostatic charges.

## Patentansprüche

1. Pneumatischer Servomotor zur Bremsunterstützung, der ein Gehäuse (2) mit einer Längsachse (X) aufweist, eine erste Kammer (10) mit niedrigem Druck, eine zweite Kammer (12) mit variablem Druck, eine Schürze (4), die die erste und die zweite Kammer (10, 12) begrenzt und im Gehäuse (2) in dichter Weise gleitend angebracht ist, einen pneumatischen Kolben (8), der so angebracht ist, dass er mit einem mittleren Teil der Schürze (2) fest verbunden ist, ein Dreiwegeventil (20), das in einem Endstück (14) des pneumatischen Kolbens (8) angebracht ist und durch eine Bremssteuerung (33) betätigt wird, die eine Steuerstange (22) mit einer Längsachse (X) aufweist, die von einem Pedal an einem ersten Längsende (25) angetrieben wird, einen Tauchkolben (32), der kugelgelenkartig an einem zweiten Längsende (34) der Steuerstange (22) angebracht ist, wobei das Dreiwegeventil (20) ein Ausgleichsventilelement (23), das in der Ruhestellung die erste und die zweite Kammer (10, 12) verbinden kann, und ein Einlassventilelement (24) aufweist, das die Versorgung der zweiten Kammer (12) mit einem unter hohem Druck stehenden pneumatischen Fluid ermöglicht, wobei das Ausgleichsventilelement (23) einen ersten, vom Körper (14) des Kolbens getragenen Sitz (26) und einen Verschluss (36) aufweist, wobei das Einlassventilelement (24) einen zweiten, vom einem ersten Längsende des Tauchkolbens getragenen Sitz (28) und den Verschluss (36) aufweist, wobei der Tauchkolben (32) an einem zweiten, zum ersten Ende (54) entgegengesetzten Längsende eine Oberfläche aufweist, die einer ersten Fläche einer Reaktionsscheibe (55) gegenüberliegt, welche über eine zweite Fläche an einem ersten Längsende (50) einer Schubstange (48) anliegt, die eine auf die Bremssteuerung aufgebrachte Bremskraft und die Bremsunterstützung zu einem Hauptzylinder übertragen kann, wobei der pneumatische Kolben (8) in seinem mittleren Teil auch eine Oberfläche aufweist, die an der ersten Fläche der Reaktionsscheibe (55) anliegt, **dadurch gekennzeichnet, dass** der Servomotor Mittel (68, 168, 268, 368, 468) aufweist, die die Dämpfung der Relativbewegung und insbesondere der schwingenden Relativbewegung zwischen der Bremssteuerung und dem pneumatischen Kolben ermöglichen, wenn keine hydraulische Reaktion vorhanden ist.

2. Pneumatischer Servomotor zur Bremsunterstützung nach Anspruch 1, **dadurch gekennzeichnet, dass** die Dämpfungsmittel (68) eine Verbindung durch Reibung zwischen der Bremssteuerung (33) und dem pneumatischen Kolben (8) realisieren.

3. Pneumatischer Servomotor zur Bremsunterstützung nach Anspruch 2, **dadurch gekennzeichnet, dass** die Dämpfungsmittel (68) zwischen dem Tauchkolben (32) und dem Kolben (8) angeordnet sind.

4. Pneumatischer Servomotor zur Bremsunterstützung nach Anspruch 3, **dadurch gekennzeichnet, dass** die Dämpfungsmittel eine ringförmige Nut (70), die in einer Außenwand eines ersten zylindrischen Teils (44) des Tauchkolbens (32) nahe der Steuerstange (22) ausgebildet ist, und ein Element (72) aus einem Material mit hohem Reibungskoeffizienten aufweisen, das in der Nut (170) angebracht ist und mit einem ersten zylindrischen Abschnitt (42) eines Durchgangs (18) des Kolbens (8) in Kontakt gelangen soll.

5. Pneumatischer Servomotor zur Bremsunterstützung nach Anspruch 3, **dadurch gekennzeichnet, dass** die Dämpfungsmittel (68) eine ringförmige Nut (74), die in einer Innenwand eines zweiten zylindrischen Abschnitts (60) des Durchgangs (18) des Kolbens (8) ausgebildet ist, und ein Element (72) aus einem Material mit einem hohen Reibungskoeffizienten aufweisen, das in der Nut (74) angebracht ist und mit einem zweiten zylindrischen Teil (58) des Tauchkolbens nahe der Steuerstange in Kontakt gelangen soll.

6. Pneumatischer Servomotor zur Bremsunterstützung nach Anspruch 3, **dadurch gekennzeichnet, dass** die Dämpfungsmittel eine ringförmige Nut (70), die in einer Außenwand eines zweiten zylindrischen Teils (58) des Tauchkolbens nahe der Reaktionsscheibe (55) ausgebildet ist, und ein Element (72) aus einem Material mit einem hohen Reibungskoeffizienten aufweisen, das in der Nut (70) angebracht ist und mit einem zweiten zylindrischen Abschnitt (60) eines Durchgangs (18) des Kolbens (8) in Kontakt gelangen soll.

7. Pneumatischer Servomotor zur Bremsunterstützung nach einem der Ansprüche 4 bis 6, **dadurch gekennzeichnet, dass** das Element (72) aus Elastomer hergestellt ist.

8. Pneumatischer Servomotor zur Bremsunterstützung nach dem vorhergehenden Anspruch, **dadurch gekennzeichnet, dass** das Element eine torische Dichtung ist.

9. Pneumatischer Servomotor zur Bremsunterstützung nach einem der Ansprüche 2 bis 8, **dadurch gekennzeichnet, dass** die Reibungskräfte zwischen dem Kolben (8) und der Bremssteuerung vorteilhafterweise zwischen 5 Newton und 40 Newton betragen.

10. Pneumatischer Servomotor zur Bremsunterstützung nach dem vorhergehenden Anspruch, **dadurch gekennzeichnet, dass** die Reibungskräfte zwischen dem Kolben (8) und der Bremssteuerung in einer vorteilhafteren Weise zwischen 5 Newton und 20 Newton betragen.

11. Pneumatischer Servomotor zur Bremsunterstützung nach dem vorhergehenden Anspruch, **dadurch gekennzeichnet, dass** die Reibungskräfte zwischen dem Kolben (8) und der Bremssteuerung in einer noch vorteilhafteren Weise zwischen 10 Newton und 20 Newton betragen.

12. Pneumatischer Servomotor zur Bremsunterstützung nach Anspruch 1, **dadurch gekennzeichnet, dass** die Dämpfungsmittel (168) über ein erstes Ende ein festes Element (37) des Kolbens und über ein zweites Ende eine hintere Fläche des Verschlusses (32) verbinden.

13. Pneumatischer Servomotor zur Bremsunterstützung nach Anspruch 1, **dadurch gekennzeichnet, dass** die Dämpfungsmittel (268) über ein erstes Ende ein festes Element (37) des Kolbens (8) und über ein zweites Ende die Steuerstange (22) verbinden.

14. Pneumatischer Servomotor zur Bremsunterstützung nach Anspruch 1, **dadurch gekennzeichnet, dass** die Dämpfungsmittel (368, 468) magnetische Dämpfungsmittel sind.

15. Pneumatischer Servomotor zur Bremsunterstützung nach dem vorhergehenden Anspruch, **dadurch gekennzeichnet, dass** ein erster Magnet (302) und ein zweiter Magnet (304) an der Bremssteuerung (33) bzw. am pneumatischen Kolben (8) so angebracht sind, dass ihre entgegengesetzten Pole einander gegenüberliegen oder zumindest teilweise einander gegenüberliegen.

16. Pneumatischer Servomotor zur Bremsunterstützung nach dem vorhergehenden Anspruch, **dadurch gekennzeichnet, dass** mindestens einer der Magnete (302, 304) ein Elektromagnet ist und dass vorgesehen ist, die elektrische Versorgung des Elektromagneten zu unterbrechen, wenn die Gefahr, dass störende schwingende Relativbewegungen zwischen dem Kolben und dem Tauchkolben auftreten, verschwunden ist.

17. Pneumatischer Servomotor zur Bremsunterstützung nach Anspruch 1, **dadurch gekennzeichnet, dass** die Dämpfungsmittel elektrostatische Dämpfungsmittel sind.

18. Pneumatischer Servomotor zur Bremsunterstützung nach dem vorhergehenden Anspruch, **dadurch gekennzeichnet, dass** der Kolben und die Bremssteuerung zumindest lokal durch entgegengesetzte elektrostatische Ladungen geladen sind.
